# EUROPEAN PATENT APPLICATION

(11) **EP 1 034 821 A2**
(43) Date of publication of application: **13.09.2000**
(21) Application number: 00104832.1
(22) Date of filing: 07.03.2000
(51) Int. Cl.: A63F 13/10

(54) **Game apparatus, control method for game apparatus, and recording medium with game program recorded therein**

(30) Priority: 10.03.1999 JP 6281299
(71) Applicant: Konami Co., Ltd., Tokyo 105-6021 (JP)
(72) Inventor: Horikawa, Kentaro, 202, Hokushin Haitsu, Sapporo-shi, Hokkaido 003-0832 (JP); Kato, Hidenori, 202, Haitsu MU, Sapporo-shi, Hokkaido 003-0027 (JP)
(74) Representative: Manitz, Finsterwald & Partner

(57) **Abstract**

A game apparatus for a bringing-up game includes an outfitting mode. In the outfitting mode, a game player can designate colors of an outfit item, such as clothes or an accessory, worn by a dog character according to a liking of the game player. Thus, a display image of the dog character wearing the outfit item can be diversified to render the game more attractive.

## Description

### BACKGROUND OF THE INVENTION

### FIELD OF THE INVENTION

The present invention relates to a game apparatus which can display a character wearing an outfit item, a control method for the game apparatus, and a recording medium recording therein a game program for use in the game apparatus.

### DESCRIPTION OF THE RELATED ART

Those game apparatuses are well known, wherein a character is virtually outfitted with an outfit item which is allocated a particular effect, for example, an effect of increasing the attack power of the character when the outfit item is a weapon. In this case, in order that a game player can recognize the character virtually outfitted with the outfit item, outfit display image data corresponding to the outfit item is prepared in advance and, when the character is outfitted with the outfit item, character display image data and the outfit display image data are combined or superimposed and a combined image is displayed on a display screen of a display unit.

Those game apparatuses are also well known wherein an outfit item is not allocated a particular effect and is outfitted only by way of ornament. For example, one of them may be such a game apparatus wherein a character is virtually dressed up by changing clothes.

However, in the foregoing conventional game apparatuses, outfit display image data are fixedly determined in advance so that an image to be displayed when a corresponding outfit item is outfitted by a character is also fixed. Thus, there is a problem that variation is poor from an ornamental point of view. Particularly, in a so-called bringing-up game for bringing up a character, it is desired that a game player form an attachment to the character, i.e. the game player have empathy with the character, because such an attachment causes the game player to be keen on bringing up the character. Thus, also from this aspect, it is preferable that a character can be outfitted with an outfit item according to liking of a game player, and further, the game player can reflect his/her liking on an image of the outfit item when outfitted by the character.

### SUMMARY OF THE INVENTION

Therefore, it is an object of the present invention to provide a game apparatus which can diversify a display image of an outfit item when outfitted by a character.

It is another object of the present invention to provide a control method for a game apparatus, which can diversify a display image of an outfit item when outfitted by a character.

It is another object of the present invention to provide a recording medium recording therein a game program which can realize the foregoing game apparatus or control method, when executed.

According to one aspect of the present invention, there is provided a game apparatus comprising image data storing means for storing basic image data for displaying a basic figure of a character and a plurality of outfit item display image data each for displaying a corresponding outfit item to be outfitted by the character; and character display image producing means, responsive to an outfit item select command input from a game player to select one of the outfit items, for reading the outfit item display image data of the selected outfit item and the basic image data from the image data storing means and for producing, using the read image data, character display image data representing the character outfitted with the selected outfit item, wherein the outfit item display image data includes color designation data for designating a color of the corresponding outfit item, wherein the character display image producing means comprises outfit item color setting means for setting the color designation data in response to a color designation command input from the game player, the color designation command input being separate from the outfit item select command input, and wherein the character display image producing means produces the character display image data using the outfit item display image data including the color designation data set by the outfit item color setting means and the basic image data.

It may be arranged that the character display image producing means comprises color candidate presenting means for presenting color candidates for the selected outfit item to the game player, and that the outfit Item color setting means sets the color designation data based on a color candidate select command input from the game player.

It may be arranged that each of the color candidates includes a plurality of colors.

It may be arranged that the outfit item display image data includes pattern data representing a layout pattern of a plurality of colors for the corresponding outfit item, that the outfit item color setting means sets the color designation data designating a plurality of colors for the selected outfit item in response to the color designation command input from the game player, and that the character display image producing means produces the character display image data using the color designation data designating the plurality of colors and the pattern data.

It may be arranged that when the number of the colors designated by the color designation command input from the game player is smaller than the number of the colors of the layout pattern, the character display image producing means derives color designation data other than the designated colors based on the designated colors.

According to another aspect of the present invention, there is provided a control method for a game apparatus, the game apparatus comprising image data storing means for storing basic image data for displaying a basic figure of a character and a plurality of outfit item display Image data each for displaying a corresponding outfit item to be outfitted by the character, and character display image producing means, responsive to an outfit item select command input from a game player to select one of the outfit items, for reading the outfit item display image data of the selected outfit item and the basic image data from the image data storing means and for producing, using the read image data, character display image data representing the character outfitted with the selected outfit item, the control method comprising the steps of setting color designation data based on a color designation command input from the game player which is separate from the outfit item select command input, the color designation data included in the outfit item display image data for designating a color of the selected outfit item; and producing the character display image data using the outfit item display image data of the selected outfit item including the color designation data and the basic image data.

According to another aspect of the present invention, there is provided a recording medium recording therein a game program for use in a game apparatus comprising image data storing means for storing basic image data for displaying a basic figure of a character and a plurality of outfit item display image data each for displaying a corresponding outfit item to be outfitted by the character, and character display image producing means, responsive to an outfit item select command input from a game player to select one of the outfit items, for reading the outfit item display image data of the selected outfit item and the basic image data from the image data storing means and for producing, using the read image data, character display image data representing the character outfitted with the selected outfit item, the game program, when read by the game apparatus, causing the game apparatus to execute the steps of setting color designation data based on a color designation command input from the game player which is separate from the outfit item select command input, the color designation data included in the outfit item display image data for designating a color of the selected outfit item: and producing the character display image data using the outfit item display image data of the selected outfit item including the color designation data and the basic image data.

It may be arranged that the color designation data setting step comprises presenting color candidates for the selected outfit item to the game player, and setting the color designation data based on a color candidate select command input, being the color designation command input, from the game player.

### BRIEF DESCRIPTION OF THE DRAWINGS

The present invention will be understood more fully from the detailed description given hereinbelow, taken in conjunction with the accompanying drawings.

In the drawings:
Fig. 1 is a circuit diagram showing a hardware configuration of a game apparatus according to a preferred embodiment of the present invention;
Fig. 2 is a diagram showing an example of an outfitting image according to the preferred embodiment of the present invention;
Fig. 3 is a diagram showing another example of an outfitting Image according to the preferred embodiment of the present invention:
Fig. 4 is a diagram showing an example of a simple setting mode image according to the preferred embodiment of the present invention:
Fig. 5 is a diagram showing an example of a detail setting mode image according to the preferred embodiment of the present invention, wherein the color of a dark-striped portion of the selected clothes is designated:
Fig. 6 is a diagram showing an example of a detail setting mode image according to the preferred embodiment of the present Invention, wherein the color of a light-striped portion of the selected clothes is designated;
Fig. 7 is a diagram for explaining a technique of producing colors from two colors designated by a game player:
Fig. 8 is a diagram showing an example of a game image according to the preferred embodiment of the present invention;
Fig. 9 is a diagram showing another example of a game image according to the preferred embodiment of the present invention:
Fig. 10 is a flowchart for explaining the overall operation of the game apparatus according to the preferred embodiment of the present invention:
Figs. 11 and 12 are diagrams showing a flowchart for explaining an operation of an outfitting mode of the game apparatus according to the preferred embodiment of the present invention: and
Fig. 13 is a flowchart for explaining an operation of a color mode of the game apparatus according to the preferred embodiment of the present invention.

### DESCRIPTION OF THE PREFERRED EMBODIMENT

Now, a preferred embodiment of the present invention will be described in detail with reference to the accompanying drawings.

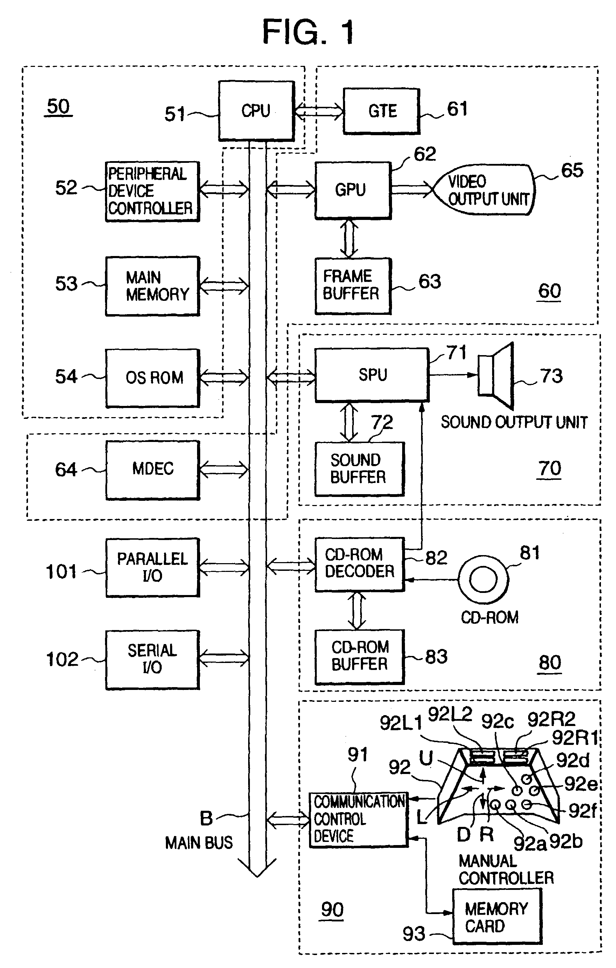

In this embodiment, a game apparatus reads game program data from an optical disk such as a CD-ROM or the like and executes the read game program data for displaying a video game according to commands inputted from a user, i.e. a game player, as described in JP-A-8-212377. Specifically, the game apparatus has a hardware configuration as shown in Fig. 1.

As shown In Fig. 1, the game apparatus comprises a control system 50 for controlling the game apparatus in its entirety, a graphic system 60 for handling image data, a sound system 70 for handling sound data, an optical disk controller 80 for reading data from an optical disk such as a CD-ROM and decoding the read data, a communication controller 90 for controlling user's commands and stored game settings, and a main bus B interconnecting these systems and controllers.

The control system 50 includes a main memory 53 such as a 2-Mbyte RAM for storing three-dimensional image data read from a CD-ROM. The graphic system 60 includes a frame buffer 63 for storing a color information table, texture pattern information, semitransparency ratio designating data, etc. as characteristic data designated for each of polygons of images to be displayed, and a geometry transfer engine (GTE) 61 as a coordinate transforming means for converting three-dimensional image data into two-dimensional image data through perspective transformations. The control system 50 further includes a central processing unit (CPU) 51 as a graphic command generating means for generating packetized graphic commands for respective polygons by combining the two-dimensional image data with information that specifies characteristics of the polygons. The graphic system 60 further includes a graphics processing unit (GPU) 62 for generating and storing two-dimensional image information based on characteristic data designated by the generated graphic commands into the frame buffer 63, such as a 1-Mbyte frame buffer, and a video output unit 65 such as a display unit for reading two-dimensional image information from the frame buffer 63 in synchronism with a television synchronizing signal and displaying the two-dimensional image information on its display screen.

The control system 50 further includes a peripheral device controller 52 for controlling interrupts, time control processes, and data transfer according to memory control direct memory access (DMA), and a ROM 54 such as a 512-Kbyte ROM for storing an operating system for controlling the main memory 53, the graphic system 60 and the sound system 70.

The CPU 51 is, for example, a 32-bit RISC (Reduced instruction-Set Computer) CPU and serves to control the game apparatus as a whole by executing the operating system stored in the ROM 54. The CPU 51 has a command cache memory and a scratch pad memory, and effects real- memory management.

The GTE 61 comprises a coordinate-calculating coprocessor for effecting coordinate transformations on image data stored in the main memory 53. The graphic system 60 further includes an image decoder (MDEC) 64 for decoding image data that have been compressed and encoded by orthogonal transformations such as discrete cosine transformations.

The GTE 61 has a parallel calculating function for carrying out a plurality of calculations parallel to each other. The GTE 61 serves as a coprocessor for the CPU 51 and effects at high speeds coordinate transformations such as perspective transformations, light source calculations by calculating inner products of normal vectors and light source vectors, and calculations of matrices and vectors in the fixed-point representation, in response to calculation requests from the CPU 51.

Specifically, when the GTE 61 carries out calculations for a flat shading process for displaying each triangular polygon with the same color, the GTE 61 can effect coordinate transformations for a maximum of about 1500 thousand polygons per second. The image processing system, therefore, reduces the burden on the CPU 51 and can effect coordinate transformations at high speed. Each of the polygons is a minimum graphic unit used to construct a three-dimensional object on the display screen of the display unit, and may have a polygonal shape such as a triangular shape, a quadrangular shape, or the like.

The GPU 62 operates according to polygon graphic commands from the CPU 51 to generate and store polygons, etc. into the frame buffer 63. The GPU 62 is capable of generating a maximum of about 360 thousand polygons per second. The GPU 62 has a two-dimensional address space independent of the CPU 51, and the frame buffer 63 is mapped onto the two-dimensional address space.

The frame buffer 63 comprises a so-called dual-port RAM for simultaneously transferring graphic data from the GPU 62 or data from the main memory 53, and reading data from itself for display. The frame buffer 63 has a 1-Mbyte storage capacity, for example, as described above, and stores a matrix of 1024 horizontal pixels x 512 vertical pixels each of 16 bits. Data contained in any arbitrary display area of the frame buffer 63 can be outputted to the video output unit 65.

The frame buffer 63 has, in addition to the display areas for storing image data to be outputted to the video output unit 65, a CLUT area (second area) for storing a color lookup table (CLUT) to be referred to when the GPU 62 generates polygons, and a texture area (first area) for storing texture data to be mapped onto polygons that are generated by the GPU 62. The CLUT area and the texture area are dynamically variable as the display areas change. The frame buffer 63 allows image data stored In the display areas to be accessed while they are being displayed and also can transfer data in a quick DMA mode between itself and the main memory 53.

The GPU 62 is capable of effecting, in addition to the flat shading process, a Gouraud shading process for interpolating the colors of vertices of polygons into colors in the polygons, and a texture mapping process for mapping texture data stored in the texture area onto the polygons.

For carrying out the Gouraud shading process or the texture mapping process, the GTE 61 is able to effect coordinate calculations for a maximum of about 500 thousand polygons per second.

The MDEC 64 is controlled by the CPU 51 to decode image data of still images or moving images which have been read from the CD-ROM and stored in the main memory 53, and store decoded image data back into the main memory 53. Specifically, the MDEC 64 can effect inverse discrete cosine transforms (IDCTs) at high speed to expand compressed data read from the CD-ROM, the data being compressed according to a color still image compression standard (so-called "JPEG") or a moving image compression standard (so-called "MPEG", by way of intraframe compression only according to this embodiment).

The decoded image data is stored through the GPU 62 into the frame buffer 63 for use as background images for images that are generated by the GPU 62.

The sound system 70 comprises a sound processing unit (SPU) 71 for generating music sounds, effect sounds, etc. according to commands from the CPU 51, a sound buffer 72 having a storage capacity of 512 Kbytes, for example, for storing sound data such as of voices, music sounds, etc. and sound source data read from the CD-ROM, and a sound output unit 73 such as a loudspeaker for outputting music sounds, effect sounds, etc. generated by the SPU 71.

The SPU 71 has an ADPCM decoding function for decoding sound data which has been encoded as a 4-bit differential signal from 16-bit sound data by ADPCM (Adaptive Differential Pulse-Code Modulation), a reproducing function for reproducing sound source data stored in the sound buffer 72 into effect sounds, and a modulating function for modulating and reproducing sound data stored in the sound buffer 72. The SPU 71 is capable of automatically converting operation parameters with looping and time coefficients, has an ADPCM source capable of producing 24 voices, and operates under the control of the CPU 51. The SPU 71 manages an address space of its own onto which the sound buffer 72 is mapped, and transfers ADPCM data from the CPU 51 to the sound buffer 72, and directly transfers key-on/key-off and modulation information for reproducing the data.

The sound system 70 thus constructed can be used as a so-called sampling sound source for generating music sounds, effect sounds, etc. based on the data stored in the sound buffer 72.

The optical disk controller 80 comprises a disk drive 81 for reproducing a video game program and data recorded in an optical disk which typically comprises a CD-ROM, a decoder 82 for decoding the video game program and data which have been recorded together with an error correcting code, and a buffer 83 having a storage capacity of about 32 Kbytes for temporarily storing reproduced data from the disk drive 81. The optical disk controller 80 supports various disk formats including CD-DA, CD-ROM, XA, etc. The decoder 82 also serves as part of the sound system 70.

Sound data recorded on a disk played back by the disk drive 81 may be ADPCM data such as CD-ROM or XA ADPCM data, or PCM data in the form of digital sound signals converted from analog signals.

If the recorded sound data comprises ADPCM data in the form of a 4-bit differential signal encoded from 16-bit sound data, for example, then the sound data is error-corrected and decoded by the decoder 82, and the decoded sound data is supplied to the SPU 71, which converts the digital sound data into analog sound data that are supplied to the loudspeaker 73.

If the recorded sound data comprises 16-bit PCM digital data, for example, then the sound data is decoded by the decoder 82, and the decoded sound data is supplied to the SPU 71. The sound data is mixed with an output signal from the SPU 71, and the mixed sound data is transmitted through a reverberation unit which generates a final audio output signal.

The communication controller 90 comprises a communication control device 91 for controlling communication with the CPU 51 through the main bus B, a manual controller 92 for entering commands from the game player, and a memory card 93 for storing game settings and results.

The manual controller 92 serves as an interface for transmitting the will of the game player to the application, and has various keys described below. The manual controller 92 is controlled by the communication control device 91 to transmit key states about 60 times per second to the communication control device 91 according to a synchronous communication process. The communication control device 91 then transmits the key states from the manual controller 92 to the CPU 51. The manual controller 92 has two connectors and a multiple-pin tap. Therefore, a number of manual controllers 92 can be connected to the game apparatus. Commands from the game player are supplied through the manual controller 92 to the CPU 51, which effects various processing operations based on the supplied commands according to the video game program which is being executed.

The manual controller 92 has a cross key including a left key L, a right key R an up key U and a down key D, a first left button 92L1, a second left button 92L2 a first right button 92R1, a second fight button 92R2, a start button 92a, a select button 92b, a first button 92c, a second button 92d, a third button 92e, and a fourth button 92f. The cross key allows the game player to give up, down, left and right direction commands to the CPU 51. When the game player presses the start button 92a, it instructs the CPU 51 to start the video game program that is read and loaded from a CD-ROM in the disk drive 81 into the main memory 53. The select button 92b permits the game player to make and indicate various selections with respect to the video game program loaded from the CD-ROM into the main memory 53, to the CPU 51.

When it is necessary to store settings of the game being executed or results of the game at the end of the game or while the game is in progress, the CPU 51 transmits the data of the settings or results to the communication control device 91, which stores the data into the memory card 93. The memory card 93 is connected to the communication control device 91, but not to the main bus B, and hence can be attached and detached while the game apparatus is being energized. This allows various game settings and results to be stored in a plurality of memory cards 93.

The game apparatus shown in Fig. 1 also has a 16-bit parallel input/output (I/O) port 101 connected to the main bus B, and an asynchronous serial input/output (I/O) port 102 connected to the main bus B. The parallel input/output (I/O) port 101 allows the game apparatus to be connected to peripheral devices. The serial input/output (I/O) port 102 allows the game apparatus to communicate with another game apparatus.

The main memory 53 is required to transfer a large amount of image data at high speed between itself and the GPU 62, the MDEC 64 and the decoder 82 when reading the video game program, displaying images, and generating graphic data. To meet such requirements, the game apparatus can operate in a DMA data transfer mode for directly transferring data between the main memory 53, the GPU 62, the MDEC 64 and the decoder 82 under the control of the peripheral device controller 52 rather than the CPU 51. This can reduce the burden imposed on the CPU 51 for the transfer of the data, and can transfer the data at high speed.

When the game apparatus is turned on, the CPU 51 executes the operating system stored in the ROM 54. When the operating system is executed, the CPU 51 initializes the game apparatus as a whole by confirming its operation, thereafter controls the optical disk controller 80 to read and load the video game program recorded in an optical disk such as a CD-ROM, and then executes it. When the video game program is executed, the CPU 51 controls the graphic system 60 and the sound system 70 depending on commands entered by the game player to display images and generate effect sounds and music sounds.

Displaying images on the video output unit 65 will be described hereinbelow.

The GPU 62 displays data stored in an arbitrary rectangular area of the frame buffer 63 on the display screen of the video output unit 65 such as a CRT. The rectangular area will be hereinafter referred to as a "display area". The display area may have a size selected according to a mode that has been selected. For example, when a mode 0 is selected, the display area has a size of 256 (H) x 240 (V) (noninterlaced), and when a mode 9 is selected, the display area has a size of 384 (H) x 480 (V) (interlaced). Therefore, it is possible to designate a display start position and a display end position independently for horizontal and vertical positions on the display screen. Ranges of values that can be designated for coordinates in different modes are as follows: In modes 0 and 4, horizontal coordinates can be designated in a range from 0 to 276 (coordinates for the horizontal display start position) and in a range from 4 to 280 (coordinates for the horizontal display end position). In modes 8 and 9, horizontal coordinates can be designated in a range from 0 to 396 (coordinates for the horizontal display start position) and in a range from 4 to 400 (coordinates for the horizontal display end position). In modes 0 through 3 and 8, vertical coordinates can be designated in a range from 0 to 240 (coordinates for the vertical display start position). In modes 4 through 7 and 9, vertical coordinates can be designated in a range from 4 to 484 (coordinates for the vertical display end position). Consequently, a minimum displayed image size on the display screen is 4 horizontal pixels x 2 vertical pixels (noninterlaced) or 4 pixels (interlaced).

The GPU 62 supports two modes with respect to the number of displayable colors, i.e. a 16-bit direct mode (32768 colors) and a 24-bit direct mode (full colors). The 16-bit direct mode (hereinafter referred to as a "16-bit mode") is a 32768-color display mode. In the 16-bit mode, the number of displayable colors is smaller than in the 24-bit direct mode (hereinafter referred to as a "24-bit mode"). Since the GPU 62 calculates colors with 24 bits for generating images and has a dither function for increasing the number of gradations, it can display images in a quasi-full-color (24-bit color) display mode. The 24-bit mode is a 26777216-color (full-color) display mode. In the 24-bit mode, it is only possible to display image data (bit-map data) transferred to the frame buffer 63, and the function of the GPU 62 to generate images cannot be performed. One pixel has a bit length of 24 bits. However, coordinates and display positions on the frame buffer 63 need to be specified in terms of 16 bits. Specifically, 24-bit image data of 640 x 480 is handled as image data of 960 x 480 in the frame buffer 63. It is necessary to establish coordinates for the horizontal display end position as multiples of 8. In the 24-bit mode, therefore, a minimum displayed image size on the display screen is 8 horizontal pixels x 2 vertical pixels.

The GPU 62 has various graphic data generating functions as described below. The GPU 62 has a polygon or sprite generating function to generate polygons or sprites whose sizes range from 1 x 1 dots to 256 x 256 dots based on a 4-bit CLUT (4-bit mode, 16 colors/polygon, sprite), an 8-bit CLUT (8-bit mode, 256 colors/polygon, sprite), and a 16-bit CLUT (16-bit mode, 32768 colors/polygon, sprite), a polygon generating function to effect a flat shading process for generating polygons and sprites with screen coordinates specified for theft vertices and coloring facets of the polygons and sprites with one color, a Gouraud shading process for specifying different colors for the respective vertices and generating gradations for facets of the polygons and sprites, and a texture mapping process for preparing and mapping texture patterns (those texture patterns for use on sprites are called sprite patterns) of two-dimensional image data onto facets of the polygons and sprites, a linear graphic data generating function to generate gradations, and an image transfer function to transfer image data from the CPU 51 to the frame buffer 63. The GPU 62 also has other functions including a function to calculate an average of pixels of an image to make the image semitransparent, an a-blending function to mix pixel data at a given ratio of a, a dither function to apply noise to boundaries of colors, a graphic clipping function not to display an area beyond a graphic display area, and an offset indicating function to move a graphic display origin depending on the graphic display area.

A coordinate system for generating graphic images is of 11 bits with signs, and has values ranging from -1024 to + 1023 along each of X and Y axes. Since the frame buffer 63 has a size of 1024 x 512, any excess values are folded over. The origin of the coordinate system can be freely changed in the frame buffer 63 according to the offset indicating function. Graphic image data are generated and stored into an arbitrary rectangular area in the frame buffer 63 according to the graphic clipping function. The GPU 62 supports texture data of a maximum of 256 x 256 dots, whose horizontal and vertical values can be freely established.

Image data (texture pattern or sprite pattern) applied to polygons or sprites is stored in a non-display area of the frame buffer 63. A texture pattern or a sprite pattern comprises pages each of 256 x 256 pixels, and as many pages of a texture pattern or a sprite pattern as permissible by the storage capacity of the non-display area can be stored in the frame buffer 63. A storage capacity equal to 256 x 256 pixels In the frame buffer 63 is called a "texture page". The location of a texture page is determined by specifying a page number for a parameter in a graphic command for Indicating a texture page location (address).

A texture pattern or a sprite pattern has three color modes including a 4-bit CLUT (4-bit mode), an 8-bit CLUT (8-bit mode), and a 16-bit CLUT (16-bit mode). A CLUT is used in the color modes of the 4-bit CLUT (4-bit mode) and the 8-bit CLUT (8-bit mode). The CLUT comprises 16 to 256 R, G, B values, which are three primaries representing colors that will finally be displayed, arrayed in the frame buffer 63. The R, G, B values are numbered successively from the left in the frame buffer 63. The numbers allocated to the R, G, B values represent the colors of pixels of a texture pattern or a sprite pattern. A CLUT can be selected for each of polygons or sprites, and it is possible to provide independent CLUTs for all the polygons or sprites. The position where a CLUT is stored in the frame buffer 63 is determined by specifying a coordinate of the left end of the CLUT for a parameter in a graphic command for indicating a CLUT position (address).

The GPU 62 uses a technique known as "frame double buffering" for displaying moving images. According to the frame double buffering, two rectangular areas are used in the frame buffer 63, and while graphic image data is being generated and stored into one of the rectangular areas, graphic image data from the other rectangular area is displayed, and when the storage of the graphic image data is finished, the rectangular areas are switched around to display the stored graphic image data. Therefore, the switching between the graphic image data is prevented from being displayed. The switching between the rectangular areas of the frame buffer 63 is carried out in a vertical blanking period. Since the GPU 62 can freely establish the rectangular areas for storing graphic image data and the origin of the coordinate system, it Is possible to achieve a plurality of buffer areas by moving the rectangular areas and the origin of the coordinate system.

Each of graphic commands comprises a packet which may be specified directly by the CPU 51 or directly by dedicated hardware. If dedicated hardware is used to directly specify a packet, then the packet is of an arrangement which comprises a command format used by the CPU 51, the number of command words, and a tag indicative of a pointer to a next command. Such a packet arrangement allows a plurality of commands, which are not placed in contiguous areas in the frame buffer 63, to be connected and executed at once. Graphic commands of such a packet arrangement are transferred by the dedicated hardware, not the CPU 51.

Parameters included in graphic commands are as follows:
- CDDE:: Command code call option:
- R, G, B:: Luminance values shared by all vertices;
- Rn, Bn, Gn:: Luminance values of a vertex n:
- Xn, Yn:: Two-dimensional coordinates of a vertex n in a graphic space;
- Un, Vn:: Two-dimensional coordinates of a point in a texture source space which corresponds to a vertex n;
- CBA (CLUT BASE ADDRESS):: Starting address of a CLUT; and
- TSB (TEXTURE SOURCE BASE):: Starting address of a texture page and additional information of a texture type, etc.

For example. a triangle graphic command (command code = 1h) comprises a command code including an option, followed by vertex information given as a command argument. The number of arguments and the format vary depending on the option.

### Parameters include:

- IIP:: Type of luminance values;
- SIZ:: Size of rectangular areas:
- CNT:: Vertex used;
- TME:: Whether there is texture mapping or not:
- ABE:: Whether there is semitransparent process or not; and
- TGE:: Whether there is multiplication of a texture pattern and luminance values.

For example, when IIP is 0, a triangle is graphically generated (flat shading) with one type of luminance values (R. G. B). When CNT is 0, a triangle is graphically generated with three vertices following the command, and when CNT is 1, joint triangles, i.e., a quadrangle, are graphically generated with four vertices following the command. When TME is 0, the texture mapping is turned off, and when TME is 1, the texture mapping is turned on. When ABE is 0, the semitransparent process is turned off, and when ABE is 1, the semitransparent process is turned on. The parameter TGE is effective only when the parameter TME is effective. When TGE is 0, a texture pattern and luminance values are multiplied and displayed. When TGE is 1, only a texture pattern is displayed.

A straight line graphic command (command code = 2h) comprises a command code including an option, followed by singlepoint information given as a command argument. The number of arguments and the format vary depending on the option. For example, when IIP is 0, a pixel is graphically generated with a luminance value that is specified, and when IIP is 1, luminance values of two vertices are linearly interpolated by displacing a line segment longitudinally and a pixel is graphically generated. When CNT is 0, a straight line is graphically generated with two end points following the command. When CNT is 1, joined straight lines are graphically generated. When ABE is 0, the semitransparent processing is turned off, and when ABE is 1, the semitransparent processing is turned on. When joined straight lines are to be graphically generated, a terminal end code indicative of the end of the command is required.

A sprite graphic command (command code = 3h) comprises a command code including an option, followed by luminance information, a left lower end point of a rectangular area, a left upper end point of a texture source space, a width and height of the rectangular area, which are given as command arguments. The number of arguments and the format vary depending on the option. Since the sprite graphic command processes two pixels simultaneously, a two-dimensional coordinate Un of a point in the texture source space which corresponds to a vertex n has to be set to an even number.

Therefore, one low-order bit is meaningless. When TME is 0, the texture mapping is turned off, and when TME is 1, the texture mapping is turned on. When ABE is 0, the semitransparent process is turned off, and when ABE is 1, the semitransparent process is turned on. When TGE (effective only when the parameter TME is effective) is 0, a texture pattern (sprite pattern) and certain luminance values are multiplied and displayed. When TGE is 1, only a texture pattern is displayed. When SIZ is 00, the size of a rectangular area is designated by H in 2 fields. When SIZ is 01, the size of a rectangular area is designated by 1 x 1. When SIZ is 10, the size of a rectangular area is designated by 8 x 8. When SIZ is 11, the size of a rectangular area is designated by 16 x 16.

In this embodiment, the video game program recorded in the CD-ROM in the disk drive 81 is a program for executing a bringing-up game, wherein a game player selects a favorite character and virtually brings up the character through feeding, discipline, etc. The applicant of this application filed an European Patent Application No. 99 119 126.3 on October 5, 1999 which discloses a bringing-up game for virtually bringing up a dog as a character. The video game program in this embodiment is applicable to the bringing-up game disclosed in the European Patent Application No. 99 119 126.3.

In the bringing-up game in this embodiment, a dog as a character selected by the game player can virtually wear an outfit item, such as clothes or an accessory, and the worn clothes or accessory is reflected on a display image of the dog character being brought up.

The clothes or accessory wearing operation is carried out in an outfitting mode. The outfitting mode is executed when the game player selects the outfitting mode in a mode selection image (not shown) where various modes are selectable upon starting the bringingup game.

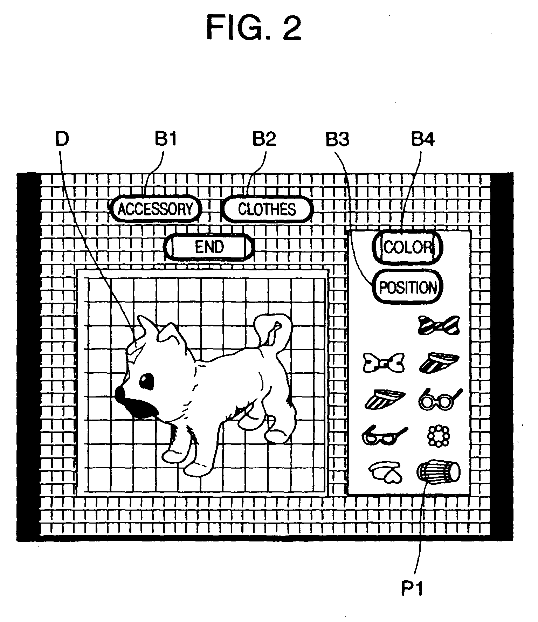

When the outfitting mode is selected, an outfitting image is displayed as shown in Fig. 2. In the outfitting image, a character image D representing the dog character selected by the game player is displayed at the center thereof, and a plurality of pattern images P (pattern images of accessories in Fig. 2) representing patterns (colored patterns) of clothes or accessories selectable by the game player are displayed on the right of the character image D. The clothes outfitting operation and the accessory outfitting operation is selectable by the game player by pushing an "accessory" button B1 or a "clothes" button B2 displayed at the upper portion of the outfitting image.

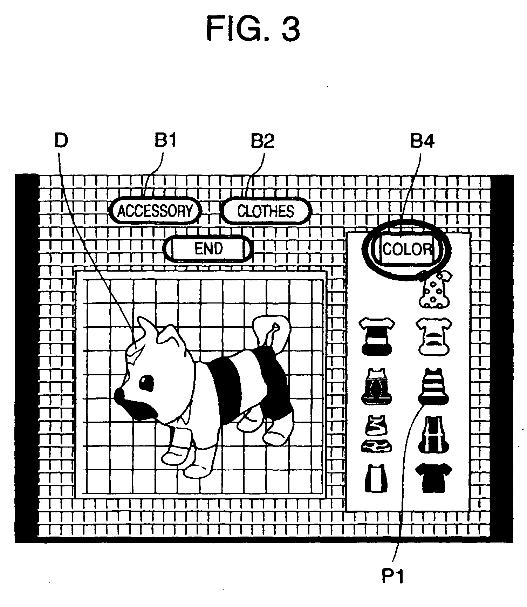

When the game player moves a pointer to one of the pattern images P of the clothes or accessories and performs a selection operation, the selection operation is reflected on the character image D displayed in the outfitting image. For example, as shown in Fig. 3, when the game player selects a pattern image P1 corresponding to lateral-striped clothes, a character image D1 wearing the lateral-striped clothes is displayed in the outfitting image. The pointer moving operation and the selection operation are implemented when the game player operates the manual controller 92 in accordance with a predetermined procedure.

Since an accessory, for example, a ribbon, can be put on at a right ear, a left ear or a tail, i.e. the position to put it on is not fixed, a "position" button B3 is provided as shown in Fig. 2 for identifying an outfitting position of the accessory after the pattern selection. Every time the "position" button B3 is pushed, the character image D with the selected accessory outfitted at one of predetermined outfitting positions is displayed in turn. Accordingly, through the operation of the "position" button B3, the accessory can be virtually outfitted at the game player's favorite position.

Data for displaying the pattern images P and data for displaying clothes and accessories outfitted on the character are recorded in the CD-ROM in the disk drive 81 and loaded into the main memory 53 upon request.

In this embodiment, default colors are set to the clothes, the accessories and the pattern images P corresponding thereto. Specifically, the clothes and the accessories are each formed by a two-color pattern, and the data for displaying the clothes, the accessories and the pattern images P each include data representing a pattern of the corresponding clothes or accessory and color designating data allocated to the pattern. In this embodiment, the clothes and the accessories are each displayed as texture data mapped onto polygons constructing the character. Thus, the pattern data represents texture pattern data and the color designating data represents number data of the color lookup table (CLUT) allocated to the pattern. Since the colors are preset in the CLUT upon the start of the game, the default colors represent colors determined upon the start of the game according to the CLUT.

The clothes and the accessories include those each using more than two colors such as gradation. In this case, once the two colors are designated, the remaining colors can be uniquely derived.

Further, in this embodiment, the colors of the clothes or the accessory selected by the game player can be designated or changed by the game player. There are provided two modes for color designation in this embodiment. One of them is a simple setting mode which allows the game player to select desired one of two-color combinations, and the other is a detail setting mode which allows the game player to designate R, G and B values of each of the two colors.

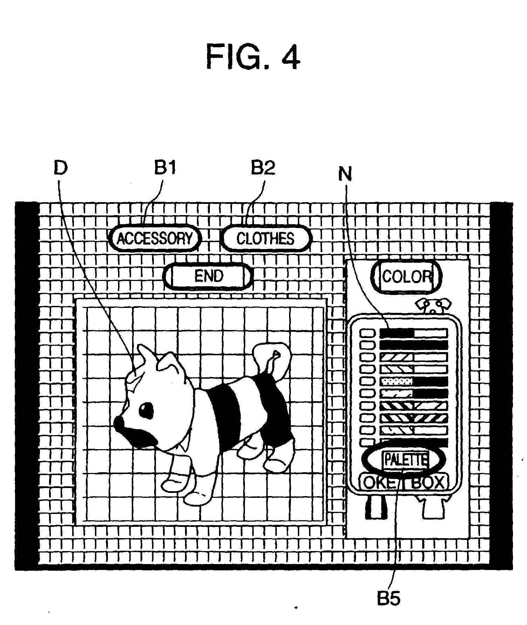

Fig. 3 shows an outfitting image wherein the game player selects clothes P1 In the clothes outfitting operation. When the game player pushes a "color" button B4 in Fig. 3, the simple setting mode is selected and executed so that a simple setting mode image is displayed as shown in Fig. 4.

The following explanation is also applied to the case wherein the game player pushes a "color" button B4 in Fig. 2.

In the simple setting mode image shown in Fig. 4, a plurality of (ten in Fig. 4) candidate display images N each representing a candidate of two-color combination are displayed on the right. When the game player selects one of the candidate display images N, color data corresponding to the selected candidate display image N is written into the CLUT at a portion of a number designated by color designating data of the clothes. Accordingly, a character image D outfitted with the clothes having the selected two-color combination is displayed in the simple setting mode image.

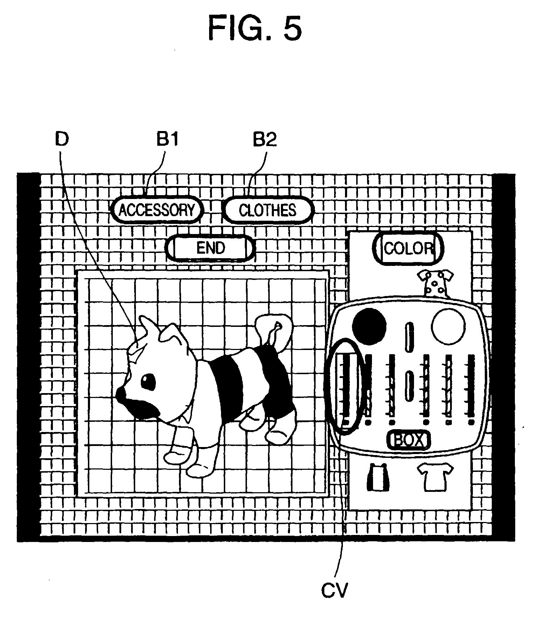

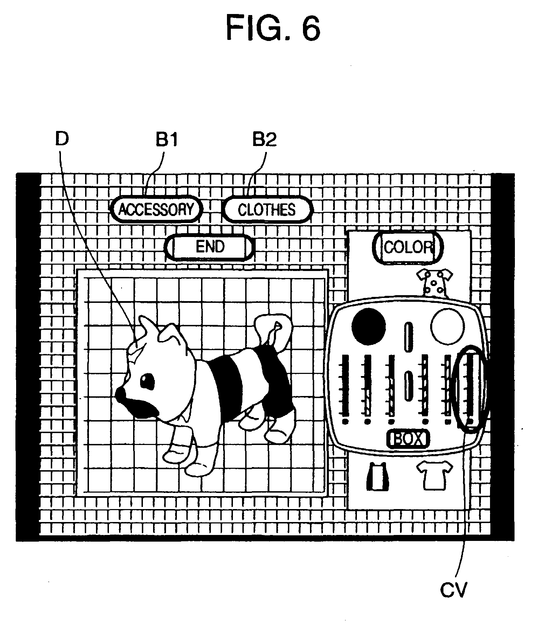

On the other hand, when the game player pushes a "palette" button B5 displayed on the lower-right in the simple setting mode image shown in Fig. 4, the detail setting mode is selected and executed so that a detail setting mode image is displayed as shown in Figs. 5 and 6.

In the detail setting mode image, a color designation image is displayed on the right for directly designating two colors. Specifically, the color designation image includes, for each of the two colors, three color designation value display images CV representing R, G and B values. Through an operation of the color designation value display images CV, the game player can directly designate each of R, G and B values in 32 levels. Color data representing the designated R, G and B values is written into the CLUT at a portion of a number designated by color designating data of the clothes. Accordingly, a character image D outfitted with the clothes having the selected two-color combination is displayed In the detail setting mode image. In the detail setting mode image shown in Fig. 5, the color of a dark-striped portion in the lateral-striped pattern is designated, while the color of a light-striped portion in the lateral-striped pattern is designated in the detail setting mode image shown in Fig. 6. As described above, the foregoing simple setting mode and detail setting mode are also applied to the color designation of the accessory.

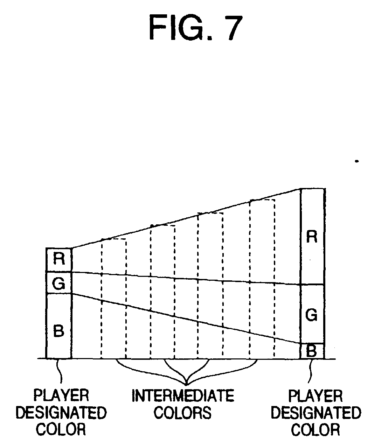

In the simple setting mode, candidates of two-colors forming the two-color combinations are determined in advance and, even when a pattern of clothes or an accessory includes more than two colors, the remaining colors other than the displayed candidates of two colors are also determined in advance although the remaining colors are not displayed. On the other hand, in the detail setting mode, since the game player directly designates the colors, if a pattern of clothes or an accessory is composed of more than two colors, the game program derives colors other than the designated two colors. Specifically, as shown in Fig. 7, the game program calculates, from R, G and B values of two colors designated by the game player, R, G and B values of intermediate colors for forming gradation. Fig. 7 shows an example of forming a pattern of gradation wherein R, G and B values change linearly. Even in other cases, colors other than two colors designated by the game player can be derived based on the designated two colors.

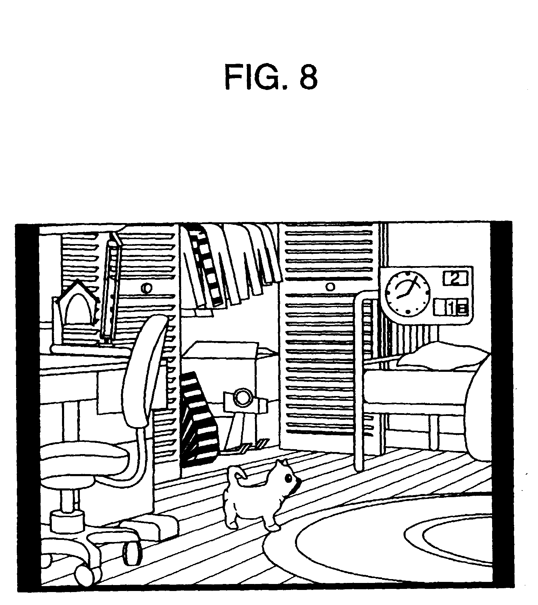

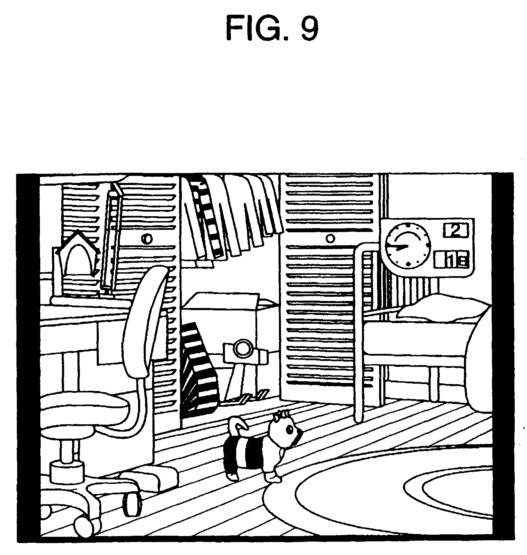

The clothes or accessory and the colors thereof designated by the game player are reflected on a character display image in the actual game image. Fig. 8 shows a game image wherein outfitting of neither clothes nor accessory is designated by the game player, while Fig. 9 shows a game image wherein outfitting of both clothes and accessory (ribbon) has been designated by the game player.

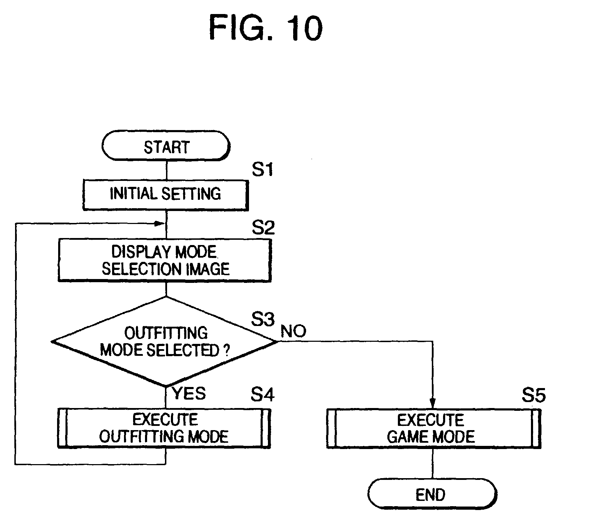

Figs. 10 to 13 are flowcharts for explaining operations of the game apparatus in this embodiment. When the game apparatus is turned on, the CPU 51 executes the operating system stored in the ROM 54. When the operating system is executed, the CPU 51 initializes the game apparatus as a whole by confirming its operation, and thereafter controls the optical disk controller 80 to read the video game program from the CD-ROM in the CD-ROM drive 81 and load it into the main memory 53. The operations of the game apparatus represented by the flowcharts shown in Figs. 10 to 13 are realized when the CPU 51 executes the video game program stored in the main memory 53.

Fig. 10 is a flowchart for explaining the overall operation of the game apparatus in this embodiment.

Step S1 implements the initial setting of the game. The contents of the initial setting are known. For example, the initial setting includes whether the memory card 93 is loaded, whether there exists data representing a history of the game, i.e. saved data, when the memory card 93 is loaded, and whether to read the saved data into the game apparatus.

Step S2 displays a mode selection image on a display screen of the video output unit 65. In the mode selection image, the game player is allowed to select one of various modes realized through execution of the game program. This technique is known. In this embodiment, the selectable modes include a game mode for executing the game, an outfitting mode for commanding a character to perform an outfitting operation, and other modes. However, for brevity of description, It is assumed that there are available only the game mode and the outfitting mode.

Step S3 judges based on an operation command input given from the controller 92 through an operation of the keys and buttons thereof by the game player, whether the outfitting mode is selected in the mode selection image. If positive at step S3, the routine proceeds to step S4 to execute the outfitting mode, and then returns to step S2 where the mode selection image is again displayed. On the other hand, if negative at step S3, the routine proceeds to step S5 to execute the game mode and then is finished.

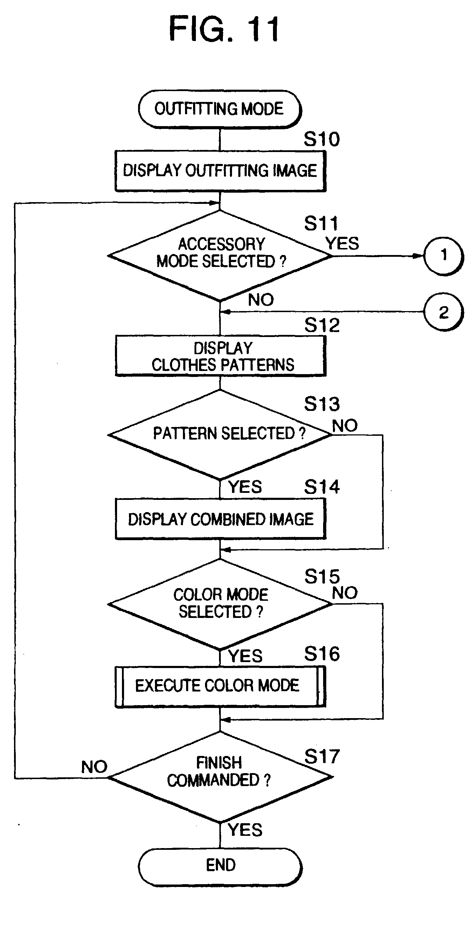

Figs. 11 to 13 are flowcharts for explaining details of the outfitting mode executed at step S4 in Fig. 10.

Step 10 in Fig. 11 displays an outfitting image on the display screen of the video output unit 65. The outfitting image is, for example, as shown in Fig. 2. However, in this flowchart, for brevity of description, the clothes outfitting operation is first executed upon selecting the outfitting mode unless an accessory mode is positively selected by the game player.

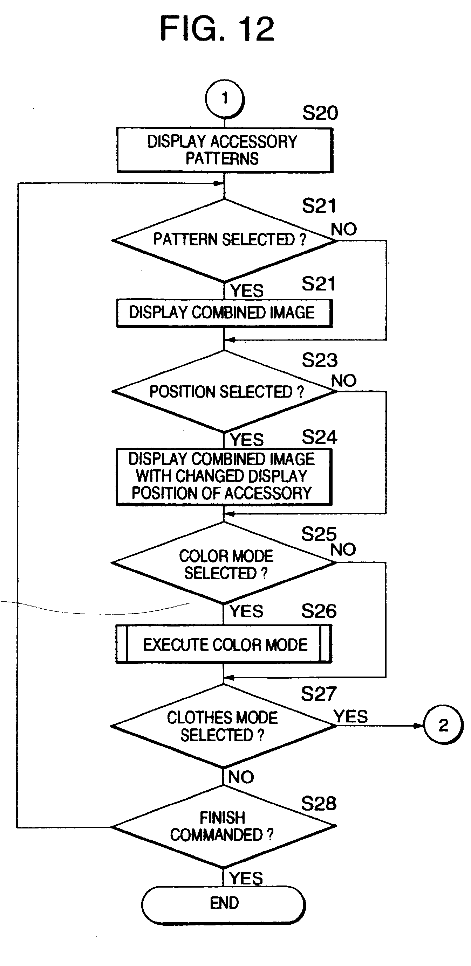

Step S11 judges whether the game player pushes the "accessory" button B1 In the outfitting image through an operation of the keys and buttons of the controller 92 to command the accessory outfitting operation, i.e. whether the game player selects the accessory mode. If positive at step S11, the routine proceeds to step S20 in Fig. 12. On the other hand, if negative at step S11. the routine proceeds to step S12.

Step S12 reads the pattern images P of the clothes from the CD-ROM in the disk drive 81 and displays them in the outfitting image. It may be arranged that all the pattern images P of the clothes and the accessories may be read into the main memory 53 before executing step S12, for example, upon starting execution of the flowchart shown in Fig. 11.

Step S13 judges whether the game player selects one of the pattern images P of the clothes through an operation of the keys and buttons of the controller 92. If positive at step S13, step S14 combines a pattern image of the clothes corresponding to the selected pattern image P in predetermined default colors with a character image and displays a combined image, such as the character image D1 shown in Fig. 3, in the outfitting image. On the other hand, if negative at step S13, the routine proceeds to step S15 bypassing step S14.

Step S15 judges whether the game player pushes the "color" button B4 in the outfitting image through an operation of the keys and buttons of the controller 92 to command color designation of the clothes, i.e. whether the game player selects a color mode. If positive at step S15, the routine proceeds to step S16 where the color mode is executed. On the other hand, if negative at step S15, the routine proceeds to step S17 bypassing step S16.

Step S17 judges whether the game player commands that the outfitting mode be finished, through an operation of the keys and buttons of the controller 92. If positive at step S17, the routine shown in the flowchart of Fig. 11 is finished, and then the routine returns to step S2 in Fig. 10. On the other hand, if negative at stet S17, the routine returns to step S11 to repeat the foregoing processes.

Step S20 in Fig. 12 reads the pattern images P of the accessories from the CD-ROM in the disk drive 81 and displays them in the outfitting image. Step 21 Judges whether the game player selects one of the pattern images P of the accessories through an operation of the keys and buttons of the controller 92. If positive at step 21, step 22 combines a pattern image of the accessory corresponding to the selected pattern image P in predetermined default colors with a character image and displays a combined image in the outfitting image. On the other hand, if negative at step S21, the routine proceeds to step S23 bypassing step S22.

Step S23 judges whether the game player pushes the "position" button B3 through an operation of the keys and buttons of the controller 92 to command a change of the accessory outfitting position. If positive at step S23, the routine proceeds to step S24 where the character image with the selected accessory whose display position is changed to one of the predetermined outfitting positions is displayed in the outfitting image. Specifically, as described before, every time the game player pushes the "position" button B3, the display position of the accessory is changed to one of the predetermined outfitting positions in turn. On the other hand, if negative at step S23, the routine proceeds to step S25 bypassing step S24.

Step S25 judges whether the game player pushes the "color" button B4 in the outfitting image through an operation of the keys and buttons of the controller 92 to command color designation of the accessory, i.e. whether the game player selects the color mode. If positive at step S25, the routine proceeds to step S26 where the color mode is executed. On the other hand, if negative at step S25, the routine proceeds to step S27 bypassing step S26.

Step S27 judges whether the game player pushes the "clothes" button B2 in the outfitting image through an operation of the keys and buttons of the controller 92 to command the clothes outfitting operation. i.e. whether the game player selects the clothes mode. If positive at step S27, the routine proceeds to step S12 in Fig. 11. On the other hand, if negative at step S27, the routine proceeds to step S28.

Step S28 judges whether the game player commands that the outfitting mode be finished, through an operation of the keys and buttons of the controller 92. If positive at step S28, the routine shown in the flowchart of Fig. 12 is finished, and then the routine returns to step S2 in Fig. 10. On the other hand, if negative at stet S28, the routine returns to step S21 to repeat the foregoing processes.

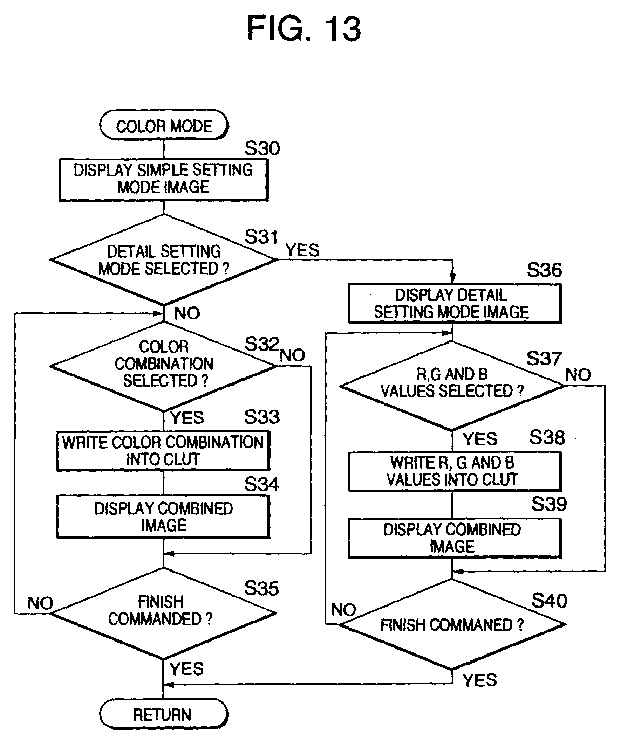

Fig. 13 is a flowchart for explaining details of the color mode executed at step S16 in Fig. 11 and at step S26 in Fig. 12.

Step S30 in Fig. 13 displays a simple setting mode image on the dIsplay screen of the video output unit 65. The simple setting mode image is, for example, as shown in Fig. 4.

Step S31 judges whether the game player pushes the "palette" button B5 in the outfitting image through an operation of the keys and buttons of the controller 92 to command a shift to a detail setting mode where the game player directly designates R, G and B values of the selected clothes or accessory. If positive at step S31, the routine proceeds to step S36. On the other hand, if negative at step S31, the routine proceeds to step S32.

Step S32 judges whether the game player pushes one of the candidate display images N displayed in the simple setting mode image through an operation of the keys and buttons of the controller 92. If positive at step S32, step S33 reads color data corresponding to the selected candidate display image N from the CD-ROM in the disk drive 81 and writes the read color data into the CLUT area of the frame buffer 63 at a place which is referred to upon displaying the clothes or accessory. Step S34 displays the character image in the outfitting image using the new color data written into the CLUT area at step S33. On the other hand, if negative at step S32, the routine proceeds to step S35 bypassing steps S33 and S34.

Step S35 judges whether the game player commands that the color mode be finished, through an operation of the keys and buttons of the controller 92. If positive at step S35, the routine shown in the flowchart of Fig. 13 is finished, and then the routine returns to step S17 in Fig. 11 or step S27 in Fig. 12. On the other hand, if negative at stet S35, the routine returns to step S32 to repeat the foregoing processes.

On the other hand, step S36 displays the detail setting mode image on the display screen of the video output unit 65. The detail setting mode image is, for example, as shown in Figs. 5 and 6.

Step S37 judges whether the game player operates one of the color designation value display images CV displayed in the detail setting mode image through an operation of the keys and buttons of the controller 92 to command direct designation of R, G and B values. If positive at step S37, step S38 writes the designated R, G and B values into the CLUT area of the frame buffer 63 at a place which is referred to upon displaying the clothes or accessory. Step S39 displays the character image In the outfitting image using the new color data written into the CLUT area at step S38. In this event, as described above, if the pattern of the clothes or accessory requires more than two colors, colors other than the two colors designated by the game player are derived using the technique shown in Fig. 7. On the other hand, if negative at step S37, the routine proceeds to step S40 bypassing steps S38 and S39.

Step S40 judges whether the game player commands that the color mode be finished, through an operation of the keys and buttons of the controller 92. If positive at step S40, the routine shown in the flowchart of Fig. 13 is finished, and then the routine returns to step S17 in Fig. 11 or step S27 in Fig. 12. On the other hand, if negative at stet S40, the routine returns to step S37 to repeat the foregoing processes.

As described above, according to this embodiment, the colors of the pattern of the clothes or accessory can be designated by the game player upon outfitting the clothes or accessory on the character, so that the display image of the clothes or accessory can be diversified. Thus, the character image outfitted with the clothes and/or accessory satisfying a liking of the game player can be displayed in the game image. Accordingly, the game player can easily form an attachment to the character so that the game becomes more attractive.

While the present invention has been described in terms of the preferred embodiment, the invention is not to be limited thereto, but can be embodied in various ways without departing from the principle of the invention as defined in the appended claims.

## Claims

1. A game apparatus comprising:
image data storing means for storing basic image data for displaying a basic figure of a character and a plurality of outfit item display image data each for displaying a corresponding outfit item to be outfitted by the character; and
character display image producing means, responsive to an outfit item select command input from a game player to select one of said outfit items, for reading the outfit item display image data of the selected outfit item and said basic image data from said image data storing means and for producing, using the read image data, character display image data representing the character outfitted with the selected outfit item,
wherein said outfit item display image data includes color designation data for designating a color of the corresponding outfit item,
wherein said character display image producing means comprises outfit item color setting means for setting the color designation data in response to a color designation command input from the game player, said color designation command input being separate from said outfit item select command input, and
wherein said character display image producing means produces the character display image data using the outfit item display image data including the color designation data set by said outfit item color setting means and said basic image data.

2. The game apparatus according to claim 1, wherein said character display image producing means comprises color candidate presenting means for presenting color candidates for the selected outfit item to the game player, and wherein said outfit item color setting means sets the color designation data based on a color candidate select command input from the game player.

3. The game apparatus according to claim 2, wherein each of said color candidates includes a plurality of colors.

4. The game apparatus according to claim 1, wherein said outfit item display image data includes pattern data representing a layout pattern of a plurality of colors for the corresponding outfit item, wherein said outfit item color setting means sets the color designation data designating a plurality of colors for the selected outfit item in response to the color designation command input from the game player, and wherein said character display image producing means produces the character display Image data using the color designation data designating the plurality of colors and said pattern data.

5. The game apparatus according to claim 4, wherein when the number of the colors designated by the color designation command input from the game player is smaller than the number of the colors of said layout pattern, said character display image producing means derives color designation data other than the designated colors based on said designated colors.

6. A control method for a game apparatus, said game apparatus comprising image data storing means for storing basic image data for displaying a basic figure of a character and a plurality of outfit item display image data each for displaying a corresponding outfit item to be outfitted by the character, and character display image producing means, responsive to an outfit item select command input from a game player to select one of said outfit items, for reading the outfit item display image data of the selected outfit item and said basic image data from said Image data storing means and for producing, using the read image data, character display image data representing the character outfitted with the selected outfit item,
said control method comprising the steps of:
setting color designation data based on a color designation command input from the game player which is separate from said outfit item select command input, said color designation data included in said outfit item display image data for designating a color of the selected outfit item; and
producing the character display image data using the outfit item display image data of the selected outfit item including said color designation data and said basic image data.

7. The control method according to claim 6, wherein the color designation data setting step comprises presenting color candidates for the selected outfit item to the game player, and setting the color designation data based on a color candidate select command input, being said color designation command input, from the game player.

8. A recording medium recording therein a game program for use in a game apparatus comprising image data storing means for storing basic image data for displaying a basic figure of a character and a plurality of outfit item display image data each for displaying a corresponding outfit item to be outfitted by the character, and character display image producing means, responsive to an outfit item select command input from a game player to select one of said outfit items, for reading the outfit item display image data of the selected outfit item and said basic image data from said image data storing means and for producing, using the read image data, character display image data representing the character outfitted with the selected outfit item,
said game program, when read by said game apparatus, causing said game apparatus to execute the steps of:
setting color designation data based on a color designation command input from the game player which is separate from said outfit item select command input, said color designation data included in said outfit item display image data for designating a color of the selected outfit item: and
producing the character display image data using the outfit item display image data of the selected outfit item including said color designation data and said basic image data.

9. The recording medium according to claim 8, wherein the color designation data setting step comprises presenting color candidates for the selected outfit item to the game player, and setting the color designation data based on a color candidate select command input, being said color designation command input, from the game player.
